# EUROPÄISCHE PATENTANMELDUNG

(11) **EP 2 151 911 A1**
(43) Veröffentlichungstag der Anmeldung: **10.02.2010**
(21) Anmeldenummer: 08161919.9
(22) Anmeldetag: 06.08.2008
(51) Int. Cl.: H02M 3/142, H02M 3/139

(54) **DC/DC-Wandler**

(71) Anmelder: ABB Schweiz AG, 5400 Baden (CH)
(72) Erfinder: Huggenberger, Thomas, CH-5415, Nussbaumen (CH)
(74) Vertreter: ABB Patent Attorneys

(57) **Zusammenfassung**

Die Erfindung betrifft einen Mehrpegel-Resonanzwandler (1) umfassend:
- mehrere Eingangskapazitäten (2,3), die mit einer Eingangsspannung aufladbar sind;
- eine Ausgangskapazität (7) zum Bereitstellen einer Ausgangsspannung;
- eine Induktivität (5), die mit den Eingangskapazitäten (2,3) und der Ausgangskapazität (7) einen Resonanzkreis bildet;
-jeder Eingangskapazität (2,3) zugeordnete Leistungsschalter (4,6), die schaltbar sind, um die Eingangskapazität wechselweise über die Induktivität (5) mit der Ausgangskapazität (7) zu verbinden, so dass in jedem Schaltzyklus eine Ladungsmenge in die Ausgangskapazität übertragen wird,
**dadurch gekennzeichnet, dass**
die Leistungsschalter (4,6) als selbsttätig abschaltende Halbleiterschalter, insbesondere Thyristoren, ausgebildet sind, die bei Unterschreiten eines Haltestroms und/oder einer Haltespannung den Stromfluss selbsttätig unterbrechen.

## Beschreibung

### Technisches Gebiet

Die Erfindung betrifft DC/DC-Wandler, insbesondere geschaltete DC/DC-Wandler, bei denen durch eine Eingangsspannung geladene Kapazitäten wechselweise in eine Ausgangskapazität entladen werden, um über der Ausgangskapazität eine gewünschte Ausgangsspannung einzustellen.

### Stand der Technik

DC/DC-Resonanzwandler sind aus dem Stand der Technik allgemein bekannt. Das Prinzip eines Resonanzwandlers besteht darin, dass mithilfe eines Resonanzkreises ein Entladen eines Eingangskondensator gemäß einem Schwingungsverlauf der Spannung bzw. des Stromes folgt, wobei mit Hilfe von elektrischen Leistungsschaltern der Resonanzkreis möglichst im Strom- oder Spannungsnulldurchgang abgeschaltet wird, um so die Schaltverluste in den Leistungsschaltern zu reduzieren und Funkstörungen zu vermeiden. Die Pulslänge, mit der die Leistungsschalter angesteuert werden, entspricht dabei in etwa gleich der halben Schwingungsdauer des gebildeten Resonanzkreises. Das Schalten im Nulldurchgang erfordert eine Detektion des Schwingungsnulldurchgangs entweder des Stromes oder der Spannung und eine Implementierung einer geeigneten Steuerung, die die Pulslänge auf den Zeitpunkt des Nulldurchgangs begrenzt.

Bei herkömmlichen DC/DC-Resonanzwandlern wird die Ladung eines Eingangskondensators an einen Ausgangskondensator angelegt, während ein weiterer Eingangskondensator zwischenzeitlich durch eine Versorgungsspannungsquelle auf eine vorgegebene Spannung aufgeladen wird. Die Zeitdauer, während der sich der Eingangskondensator in die Ausgangskapazität entlädt, wird im eingeschwungenen Betrieb abhängig von der bereitzustellenden Ausgangsspannung bzw. von dem bereitzustellenden Ausgangsstrom bestimmt. Hat die Ausgangskapazität die gewünschte Ladung erreicht, wird der Eingangskondensator von der Ausgangskapazität getrennt und kann über eine Versorgungsspannung wieder aufgeladen werden. Währenddessen wird die weitere Eingangskapazität mit dem Ausgangskondensator verbunden, um dem Ausgangskondensator weitere Ladung bereitzustellen, so dass dessen Ausgangsspannungsniveau unabhängig von der angeschlossenen Last möglichst konstant gehalten wird. Das Verbinden der Eingangskondensatoren mit der Ausgangskapazität erfolgt also im Wechsel.

Im Allgemeinen erfolgt das Verbinden der Eingangskondensatoren mit der Ausgangskapazität über elektronische Leistungsschalter, wie z.B. IGBTs und dgl., die gesteuert durch eine entsprechende Steuereinheit ein- und ausgeschaltet werden können. Um eine ausreichende Steuerbarkeit der Ausgangsspannung zu gewährleisten, müssen die elektronischen Leistungsschalter, die in dem Resonanzwandler verwendet werden, ein präzises und schnelles Schaltverhalten (Ansprechzeit) aufweisen und je nach Einsatzgebiet des Resonanzwandlers hohen Stromstärken der Entladeströme aus den Eingangskondensatoren standhalten können. Derartige Leistungsschalter sind aufwendig herzustellen und es ist daher wünschenswert, diese durch kostengünstigere Schalter zu ersetzen.

Weiterhin ist bei der beschriebenen Konfiguration ein Ausgleichen zwischen den Ladungen der Eingangskondensatoren erforderlich, wenn diese aufgrund der Spannungsregelung der Ausgangsspannung aufgrund schwankender Belastung ungleich belastet werden. Dies erfordert einen erhöhten Implementierungsaufwand für eine Steuereinheit für einen derartigen Resonanzwandler.

Es ist daher Aufgabe der vorliegenden Erfindung, einen Resonanzwandler zur Verfügung zu stellen, der mit kostengünstigeren Leistungsschaltern betrieben werden kann und bei dem Maßnahmen für einen Spannungsausgleich zwischen den Eingangskapazitäten nicht erforderlich sind.

### Darstellung der Erfindung

Diese Aufgabe wird durch den Mehrpegelresonanzwandler gemäß Anspruch 1 sowie durch das Verfahren zum Betreiben eines solchen Resonanzwandlers gemäß dem nebengeordneten Anspruch gelöst.

Weitere vorteilhafte Ausgestaltungen der Erfindung sind in den abhängigen Ansprüchen angegeben.

Gemäß einem ersten Aspekt ist ein Mehrpegel-Resonanzwandler vorgesehen. Der Resonanzwandler umfasst:
- mehrere Eingangskapazitäten, die mit einer Eingangsspannung aufladbar sind;
- eine Ausgangskapazität zum Bereitstellen einer Ausgangsspannung;
- eine Induktivität, die mit den Eingangskapazitäten und der Ausgangskapazität einen Resonanzkreis bildet;
- jeder Eingangskapazität zugeordnete Leistungsschalter, die schaltbar sind, um die Eingangskapazität wechselweise über die Induktivität mit der Ausgangskapazität zu verbinden, so dass in jedem Schaltzyklus eine Ladungsmenge in die Ausgangskapazität übertragen wird.
Die Leistungsschalter sind als selbsttätig abschaltende Halbleiterschalter, insbesondere Thyristoren, ausgebildet, die bei Unterschreiten eines Haltestroms und/oder einer Haltespannung den Stromfluss selbsttätig, d.h. ohne äußere Ansteuerung, unterbrechen.

Eine Idee der vorliegenden Erfindung besteht darin, den Resonanzwandler mithilfe von elektronischen Halbleiterschaltern mit einer Eigenschaft zum selbsttätigen Ausschalten, wie z.B. mit Thyristoren aufzubauen, sobald der Strom durch das Bauelement eine bestimmte Schwelle unterschreitet. Auf diese Weise ist es nicht länger notwendig, dass die Steuereinheit eine Pulsdauer vorgibt, während der der Leistungsschalter eingeschaltet sein soll, um die Ausgangsspannung einzuregeln. Die Verwendung derartiger Halbleiterschalter bewirkt, dass nur abhängig von den Kapazitätswerten der Eingangskapazitäten und der Ausgangskapazität dem Einschalten des betreffenden Leistungsschalters die Dauer des Einschaltzustands, d.h. die Dauer, während der die betreffende Eingangskapazität in den Ausgangskondensator entladen wird, bestimmt wird. sich durch die in der Ausgangskapazität benötigten Ladungsmenge zum Beibehalten der gewünschten Ausgangsspannung und zum Bereitstellen des benötigten Ausgangsstroms. Die Ausgangsspannung wird daher nicht wie bisher durch Vorgabe der Einschaltzeit des betreffenden Leistungsschalters eingestellt, sondern durch die Frequenz, mit der die Halbleiterschalter nacheinander gezündet werden, d.h. insbesondere von der Zeitdauer zwischen dem Ausschalten eines der Leistungsschalter und dem Einschalten/Zünden eines weiteren der Halbleiterschalter. Im Wesentlichen wird die Einschaltdauer daher nicht durch die Steuereinheit bestimmt, sondern entspricht der Zeitdauer, die notwendig ist, um eine bestimmte Energiemenge bzw. Ladungsmenge in den Ausgangskondensator zu übertragen. Da dadurch die Eingangskondensatoren bei jedem Entladevorgang auf eine konstante Spannung entladen werden, entfällt die Notwendigkeit eines aktiven Ausgleichens der Spannungen der Eingangskapazitäten (Balancing). Als geeignete elektronische Halbleiterschalter werden vorzugsweise Thyristoren verwendet, die eine entsprechende Ausschalteigenschaft bei Unterschreiten eines bestimmten Haltestroms aufweisen.

Weiterhin können die Kapazitätswerte der Eingangskapazitäten und der Ausgangskapazität sowie der Induktivitätswert der Induktivität so dimensioniert sein, dass der maximale Stromfluss im Resonanzkreis nach dem Einschalten des Halbleiterschalters keinen die Belastungsgrenze des Halbleiterschalters übersteigenden Wert annimmt.

Weiterhin können die Kapazitätswerte der Eingangskapazitäten und der Ausgangskapazität so dimensioniert sein, dass die während des Einschaltens des Halbleiterschalters übertragene Energiemenge nicht zu Spannungshüben über einem vorgegebenen maximalen Spannungshub führt.

Gemäß einer weiteren Ausführungsform können die mehreren Eingangskapazitäten, die Induktivität und die Leistungsschalter eine Ladeeinheit bilden, wobei mehrere Ladeeinheiten mit der Ausgangskapazität verbunden sind. Dadurch ist es möglich auch geringe Ausgangsleistungen bereitzustellen, indem die Kapazitätswerte der Eingangskapazitäten entsprechend niedrig dimensioniert sind, wobei die geforderte maximale Ausgangsleistung durch Zusammenwirken der mehreren Ladeeinheiten bereitgestellt werden kann.

Gemäß einem weiteren Aspekt ist ein Resonanzwandlersystem mit einem der obigen Resonanzwandler und mit einer Steuereinheit vorgesehen. Die Steuereinheit ist ausgebildet, die Ausgangsspannung zu erfassen und abhängig von der erfassten Ausgangsspannung eine Einschaltfrequenz des wechselweise Zündens der Halbleiterschalter zum Verbinden der jeweiligen Eingangskapazität mit der Ausgangskapazität einzustellen.

Es kann weiterhin vorgesehen sein, dass die Halbleiterschalter des Resonanzwandlers ausgebildet sind, dass sie durch die Steuereinheit aktiv ausschaltbar sind, wobei die Steuereinheit abhängig von der bereitgestellten Ausgangsleistung die Halbleiterschalter entweder nur über das Einstellen der Einschaltfrequenz ansteuert oder durch aktives Ausschalten zum Festlegen einer Einschaltzeitdauer der Halbleiterschalter ansteuert.

Weiterhin kann die Steuereinheit ausgebildet sein, um nach dem selbsttätigen Ausschalten des entsprechenden Halbleiterschalters innerhalb einer Freiwerdezeit kein Einschalten eines der weiteren Halbleiterschalter vorzunehmen.

Gemäß einem weiteren Aspekt ist ein Verfahren zum Betreiben des obigen Resonanzwandlers vorgesehen, wobei die Ausgangsspannung erfasst wird und abhängig von der erfassten Ausgangsspannung eine Frequenz des wechselweise Verbindens einer der Eingangskapazitäten mit der Ausgangskapazität eingestellt wird.

### Kurze Beschreibung der Zeichnungen

Bevorzugte Ausführungsformen der Erfindung werden nachfolgend anhand der beigefügten Zeichnungen näher erläutert.

Es zeigen:
- Fig. 1: ein Schaltungsdiagramm eines Dreipegel-Resonanzwandlers;
- Figuren 2a bis 2h: Signal-Zeit-Diagramme, die den Verlauf von Spannungen und Strömen in dem Resonanzwandler der Fig. 1 veranschaulichen; und
- Fig. 3: ein weiteres Schaltungsdiagramm eines weiteren Mehrpegel- Resonanzwandlers.

Gleiche Bezugszeichen bezeichnen Elemente gleicher oder vergleichbarer Funktion.

### Wege zur Ausführung der Erfindung

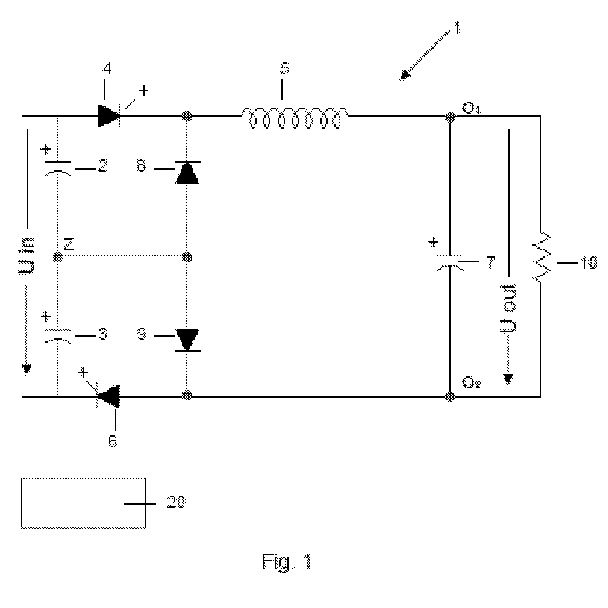

In Fig. 1 ist ein Dreipegel-Resonanzwandler 1 schematisch dargestellt. Der Resonanzwandler 1 wandelt eine Eingangsspannung Uᵢₙ in eine Ausgangsspannung Uₒᵤₜ. Der Dreipegel-Resonanzwandler 1 umfasst zwei in Reihe geschaltete Eingangskondensatoren 2 und 3. Über die Reihenschaltung der Eingangskondensatoren liegt die Eingangsspannung Uᵢₙ an. Ein von der Versorgungsquelle bereitgestelltes hohes Versorgungspotenzial V_{H} ist über einen ersten Leistungsschalter 4 über eine Induktivität 5, z.B. in Form einer Drosselspule, mit einem ersten Ausgangsanschluss O₁ verbunden. Ein niedriges Versorgungspotenzial V_{L}, das ebenfalls von der Versorgungsquelle bereitgestellt wird, ist über einen zweiten Leistungsschalter 6 mit einem zweiten Ausgangsanschluss O₂ verbunden. Zwischen dem ersten Ausgangsanschluss O₁ und dem zweiten Ausgangsanschluss O₂ ist eine Ausgangskapazität 7 vorgesehen, über der die Ausgangsspannung Uₒᵤₜ bereitgestellt wird.

Ein weiterer Anschluss des ersten Leistungsschalters 4 ist mit einem Kathodenanschluss einer ersten Freilaufdiode 8 verbunden, während ein Anodenanschluss der ersten Freilaufdiode 8 mit einem zwischen den beiden in Serie geschalteten Eingangskapazitäten 2, 3 gebildeten Zwischenpunkt Z verbunden ist. Der Zwischenpunkt Z ist weiterhin mit einem Kathodenanschluss einer zweiten Freilaufdiode 9 verbunden. Ein Anodenanschluss der zweiten Freilaufdiode 9 ist mit einem weiteren Anschluss des zweiten Leistungsschalters 6 verbunden.

Abhängig von der einzustellenden Ausgangsspannung Uₒᵤₜ und dem von einem Verbraucher gezogenen Strom Iₒᵤₜ werden die Leistungsschalter 4, 6 wechselweise so leitend geschaltet, d.h. geschlossen, dass jeweils eine der Eingangskapazitäten 2, 3 in die Ausgangskapazität 7 entladen wird. Im Detail wird die erste Eingangskapazität 2 bei Schließen des ersten Leistungsschalters 4 über die zweite Freilaufdiode 9 und die Induktivität 5 in die Ausgangskapazität 7 entladen. Nach einem Öffnen des ersten Leistungsschalters 4 wird nun der zweite Leistungsschalter 6 geschlossen, um so die zweite Eingangskapazität 3 in die Ausgangskapazität 7 zu entladen, um dort die einzustellende Ausgangsspannung Uₒᵤₜ einzuregeln. Der jeweils geschaltete Eingangskondensator 2, 3 wird unmittelbar nach dem Öffnen des jeweiligen Thyristors 4, 6 durch Anliegen der Eingangsspannung Uᵢₙ aufgeladen. Die Steuerung der Thyristoren 4, 6 erfolgt durch eine Steuereinheit 20, die die Ausgangsspannung Uₒᵤₜ erfasst und diese durch entsprechende Ansteuerung der Thyristoren gemäß einem vorgegebenen Sollwert einstellt.

Die Induktivität 5 dient in erster Linie dazu, mit dem über den geschlossenen Leistungsschalter 4, 6 jeweils angeschlossenen Eingangskondensator 2, 3 und der Ausgangskapazität 7 den Resonanzkreis des Resonanzwandlers 1 zu bilden. Durch den Resonanzkreis werden die Stromanstiege begrenzt, um so die elektrischen Bauelemente des Resonanzwandlers 1, insbesondere die elektrischen Leistungsschalter 4, 6 zu schützen. Weiterhin bewirkt der Resonanzkreis, dass sich nach dem Schließen des entsprechenden Leistungsschalters 4, 6 ein im Wesentlichen sinusförmiger Verlauf des durch die Induktivität 5 fließenden Stromes ergibt.

Während bei herkömmlichen Resonanzwandlern 1 sowohl Einschaltzeitpunkt des elektronischen Leistungsschalters 4, 6, als auch dessen Ausschaltzeitpunkt definiert durch eine Steuereinheit vorgegeben werden, ist stattdessen vorgesehen, als elektronische Leistungsschalter 4, 6 selbsttätig ausschaltende Bauelemente zu verwenden, die den Stromfluss selbsttätig unterbrechen bzw. trotz gegensätzlicher Ansteuerung geöffnet (nichtleitend) bleiben, wenn eine bestimmte Haltespannung U_{AK} zwischen Anodenanschluss und Kathodenanschluss bzw. ein bestimmter Haltestrom unterschritten wird. Diese Eigenschaften weisen Thyristoren, wie z.B. IGCTs auf. Zur Ansteuerung der Thyristoren können diese durch Injizieren eines Gate-Stromes "gezündet" werden, wonach diese geschlossen (leitfähig) werden, solange eine positive Haltespannung U_{AK} zwischen Anodenanschluss und Kathodenanschluss anliegt bzw. ein Strom fließt, der größer ist als ein Haltestrom I_{H} des Thyristors. Ein realistischer Haltestrom des Thyristors kann zwischen 50 und 100mA liegen.

Die Steuereinheit, mit der die Ausgangsspannung Uₒᵤₜ geregelt werden kann, dient bei dem Resonanzwandler der Fig. 1 lediglich dazu, die Zündzeitpunkte der Thyristoren 4, 6 vorzugeben. Da die Abschaltung der Thyristoren im Wesentlichen automatisch erfolgt, ist bei dieser Ausführungsform nicht vorgesehen, dass die Steuereinheit ein aktives Abschalten der Thyristoren 4, 6 vornimmt. Die Steuerung der Ausgangsspannung Uₒᵤₜ erfolgt lediglich durch Variieren der Frequenz, mit der die Thyristoren 4, 6 wechselweise gezündet werden. Dazu greift die Steuereinheit 10 die Spannung an den Ausgangsanschlüssen U₁, U₂ ab und erhöht die Frequenz, wenn die Ausgangsspannung zu niedrig ist und vermindert die Frequenz, wenn die Ausgangsspannung zu hoch ist.

Das Laden der Ausgangskapazität 7 erfolgt jeweils bei Schließen eines der Thyristoren 4, 6 über den dem jeweiligen Thyristor zugeordneten Eingangskondensatoren 2, 3 und der entsprechenden Freilaufdiode 8, 9, durch die dann ein Strom in Durchlassrichtung fließt. Bei Schließen des ersten Thyristors 4 fließt der Strom durch die zweite Freilaufdiode 9 und bei Schließen des zweiten Thyristors 6 fließt der Strom durch die erste Freilaufdiode 8. Bei Annahme einer im Wesentlichen eingeregelten Ausgangsspannung Uₒᵤₜ an der Ausgangskapazität 7 fließt bei jedem Schaltvorgang eine bestimmte Energiemenge aus dem geschalteten Eingangskondensator 2, 3 in die Ausgangskapazität 7. Die Zeitdauer, während der die Energiemenge in die Ausgangskapazität 7 übertragen wird, hängt im Wesentlichen von dem Ladungszustand der Ausgangskapazität 7 sowie der Kenngrößen der Bauelemente im Resonanzkreis, im vorstehend beschriebenen Resonanzwandler 1, der Induktivität 5, der Kapazität der Eingangskondensatoren 2,3 sowie der Ausgangskapazität 7 ab.

Beim Dimensionieren der Eingangskondensatoren 2, 3, der Induktivität 5 und der Ausgangskapazität 7 ist zu beachten, dass der maximale Stromfluss im Resonanzkreis bei Einschalten des betreffenden Thyristors 4, 6 keinen die Belastungsgrenze des Thyristors 4, 6 übersteigenden Wert annimmt. Weiterhin sollte die Kapazität der Eingangskondensatoren 2, 3 so auf die Ausgangskapazität angepasst sein, dass die bei jedem Schaltzyklus übertragene Energiemenge nicht zu Spannungshüben über einem Grenzwert führen und somit einen deutlichen Spannungs-Ripple der Ausgangsspannung bewirken.

Wie zuvor erwähnt, hängt die Ausgangsspannung Uₒᵤₜ von der Frequenz ab, mit der die Thyristoren 4, 6 wechselweise gezündet werden. Beim Zünden der Thyristoren 4. 6 ist darauf zu achten, dass nach dem Öffnen des jeweiligen Thyristors 4, 6 aufgrund des Unterschreitens des Haltestroms I_{H} zunächst die Freiwerdezeit abgewartet wird, bevor eine Zündung des jeweils anderen Thyristors 4, 6 erfolgt.

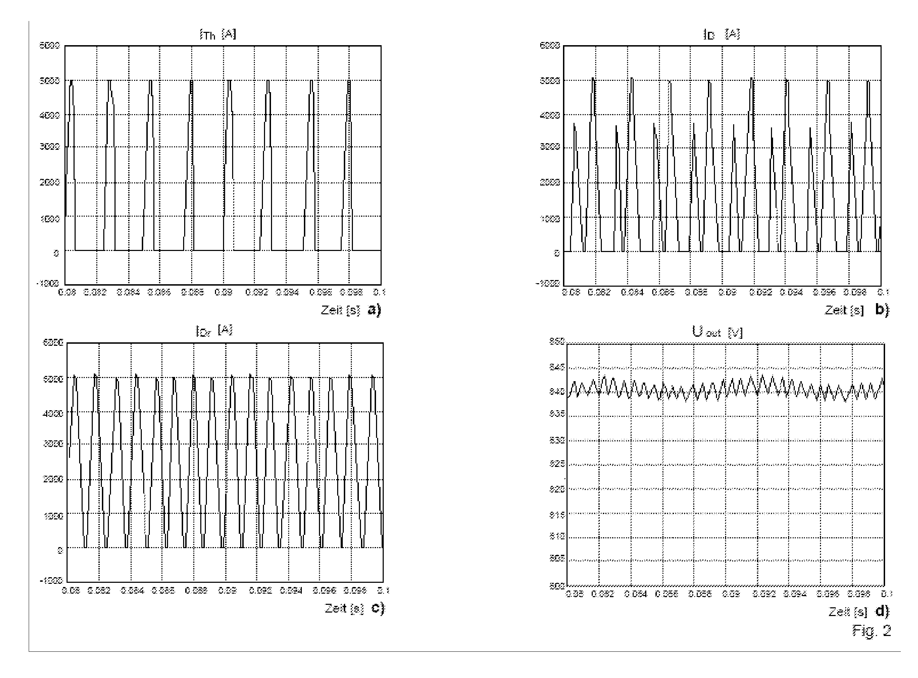

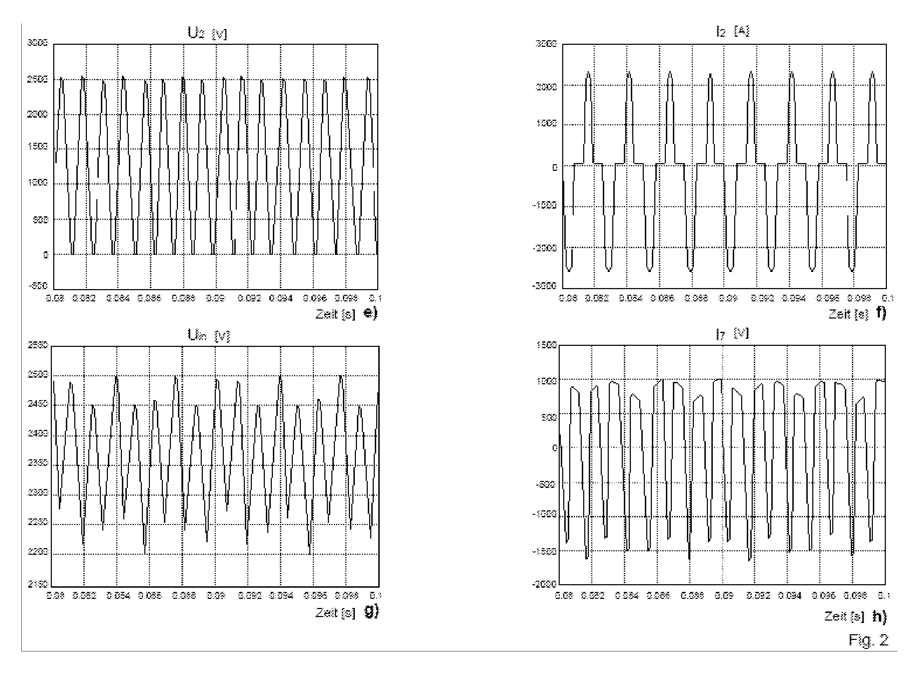

In den Figuren 2a bis 2h sind Signal-Zeit-Diagramme dargestellt, die die Verläufe von Spannungen und Strömen in dem Resonanzwandler der Fig. 1 veranschaulichen. Die Diagramme zeigen für einen beispielhaften Resonanzwandler mit Eingangskondensatoren mit jeweils einer Kapazität von 0,4 mF (Spitzenspannung 3000V), einer Induktivität von 100µH (Spitzenstrom von 5100A) und bei einer Eingangsspannung von ca. 2350V die Verläufe des Thyristorstroms (Fig. 2a), des Freilaufdiodenstroms (Fig. 2b), des Drosselstroms (Fig. 2c), der Ausgangsspannung Uₒᵤₜ (Fig. 2d), der Spannung über einem der Eingangskondensatoren (Fig. 2e), des Stromes durch einen der Eingangskondensatoren (Fig. 2f), den Verlauf der gleichgerichteten Netzspannung als Eingangsspannung Uᵢₙ sowie des Stromes durch die Ausgangskapazität 7 (Fig. 2h).

Fig. 2a stellt die Einschaltzyklen z.B. des ersten Thyristors 4 anhand des Stromverlaufs des Thyristorstroms I_{Th} dar. Der Thyristorstroms I_{Th} fließt durch die Freilaufdiode 9. Gemeinsam mit dem Freilaufstrom der Freilaufdiode 9 nach dem Abschalten des zweiten Thyristors 6 ergibt sich der gesamte Freilaufdiodenstrom I_{D} durch die Freilaufdiode 9 (Fig. 2b). Der Strom durch die Induktivität 5 zeigt den sich durch das wechselweise Schalten beider Thyristoren 4, 6 ergebende Stromverlauf des Drosselstromes I_{Dr} (Fig. 2c) und die resultierende Ausgangsspannung Uₒᵤₜ in Fig. 2d.

Fig. 2e zeigt den Verlauf der Spannung über dem ersten Eingangskondensator 2. Man erkennt dass die Spannung aufgrund entsprechend dimensionierter parasitärer Induktivitäten in den Kommutierungskreisen auch negative Werte annimmt.. Dadurch wird der Thyristor 4 nach jedem Entladevorgang gesperrt und der Eingangskondensator 2 wieder durch die Eingangsspannung Uᵢₙ, deren Verlauf in Fig. 2g gezeigt ist, aufgeladen. In Fig. 2f ist der entsprechende Stromverlauf durch den Eingangskondensator 2 dargestellt. Die positiven Halbwellen entsprechen dem Entladen des Eingangskondensators 2 und die negativen Halbwellen dem Aufladen des Eingangskondensators 2. Die Eingangsspannung Uᵢₙ ist aufgrund des zuvor verwendeten Gleichrichters nicht konstant sondern schwankt um einen Mittelwert von ca. 2350V (Fig. 2g). Fig. 2h zeigt den Stromverlauf durch die Ausgangskapazität 7 bei einem Laststrom.

Im Rahmen der Dimensionierung können die parasitären Induktivitäten der Kommutierungskreise so dimensioniert werden, dass die Thyristoren durch geeignete Beaufschlagung mit Rückwärtsspannung- und Strom sicher gesperrt werden. D.h. die parasitären Induktivitäten weisen eine Mindestgröße auf, um eine ausreichende Rückwärtsspannung zu erzeugen.

Aufgrund des diskontinuierlichen Betriebs sind die Schaltverluste der Freilaufdioden 8.9 erheblich reduziert. Daher können herkömmliche Recovery-Dioden verwendet werden, die geringere Leitfähigkeitsverluste aufweisen. Da keine Begrenzungen hinsichtlich der Abschaltfähigkeiten bestehen, kann angenommen werden, dass Halbleiterverluste deutlich gegenüber herkömmlichen Resonanzwandlern reduziert werden können. Die Eingangskondensatoren 2.3 können mit deutlich geringeren Kapazitäten (bei höheren Maximalspannungen und -strömen) ausgebildet werden, wodurch die Schutzmaßnahmen zum Schützen der einzelnen Bauelemente vor Überlast erheblich vereinfacht werden. Weiterhin ist es möglich die Induktivität 5 zu verringern und auch die Ausgangskapazität , so dass die Kosten für diese Bauelemente ebenfalls reduziert werden können.

Unter Umständen können Rückwärtsspannungsbelastungen der Thyristoren auftreten. Zum Schutz gegen eine Zerstörung nicht genügend rückwärtsspannungsfester Thyristoren (z.B. IGCTs) können diese zur Begrenzung der Rückwärtsspannung mit antiparallelen Dioden beschaltet werden.

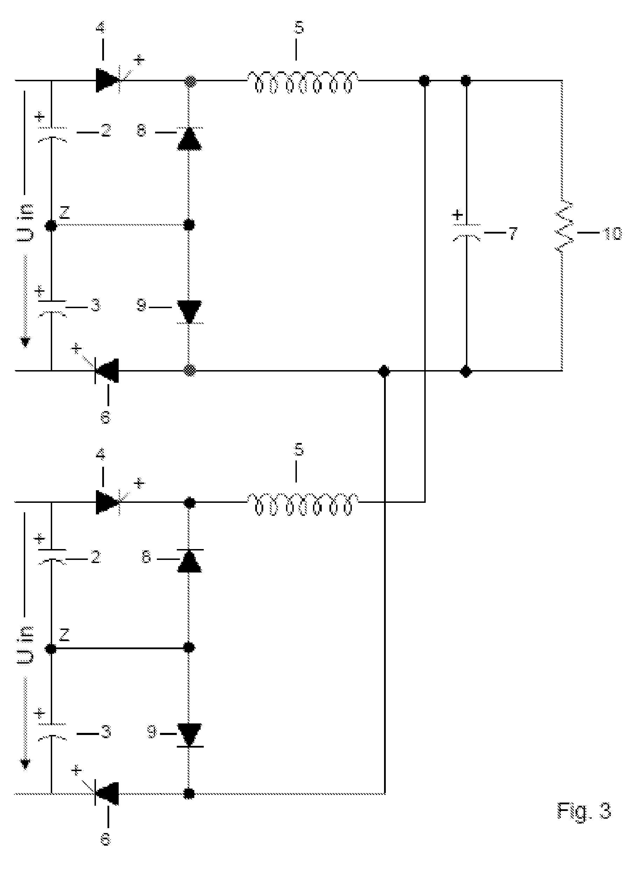

Die Betriebsart unter Verwendung des selbstabschaltenden Verhalten der Thyristoren erfordert eine Last 10 an dem Resonanzwandler 1, die der Ausgangskapazität 7 eine Leistung aufweist, bei der bei jedem Schaltvorgang eine bestimmte Energiemenge in die Ausgangskapazität 7 zugeführt werden muss, um die dort anliegende Ausgangsspannung Uₒᵤₜ einzuregeln. Dabei sollte zudem die Schaltfrequenz eine bestimmte Grenze nicht unterschreiten, da dies zu niederfrequenten Schwingungen der Ausgangsspannung Uₒᵤₜ führen würde, die nur mit aufwendigen Filterungsmaßnahmen zu filtern wäre. Aus diesem Grunde sollte das oben beschriebene Ansteuerverfahren auf Lasten beschränkt werden, deren Leistung einer Leistung zwischen etwa 50% bis 100% der maximalen Ausgangsleistung des Resonanzwandlers 1 entspricht. Ausgangsleistungen unter 50% können beispielsweise durch Parallelschalten mehrerer, vorzugsweise versetzt taktender derartiger Resonanzwandler 1 erreicht werden, die in Summe eine maximale Ausgangsleistung bereitstellen. D.h. bei gleicher Ausgangsleistung wie bei dem oben beschriebenen einfachen Resonanzwandler können zwei Resonanzwandler mit etwa je der halben Ausgangsleistung vorgesehen werden. Die versetzte Taktung dient dazu, den Rippel der Ausgangsspannung auch bei einem Teillastbetrieb mit geringer Leistung ausreichend klein zu halten. Ein solcher Aufbau ist in Fig. 3 dargestellt.

Eine weitere Alternative, geringere Ausgangsleistungen bereitzustellen, besteht darin, zusätzlich zur oben beschriebenen Funktionalität des selbsttätigen Abschaltens der Thyristoren, Thyristoren vorzusehen, die gemäß einem zweiten Betriebsmodus zum Bereitstellen geringer Ausgangsleistungen (z.B. < 50%) aktiv ausgeschaltet werden können, bevor die Haltespannung bzw. der Haltestrom unterschritten wird, so dass die in die Ausgangskapazität 7 übertragene Energiemenge gegenüber dem oben beschriebenen Betriebsmodus reduziert wird. Diese zweite Betriebsart entspricht dem herkömmlichen Betrieb eines DC/DC Wandlers.

Anstelle der einzelnen Induktivität 5 können zwei Einzelinduktivitäten für den ersten und zweiten Ausgangsanschluss O₁, O₂ vorgesehen werden. Bei einer solchen Konfiguration kann bei einer Parallelschaltung mit weiteren Resonanzwandlern entsprechend dem in Fig. 3 dargestellten Schaltungsaufbau eine bessere Symmetrie erreicht werden.

### Bezugszeichenliste

- 1: Resonanzwandler
- 2,3: Eingangskondensator
- 4, 6: Thyristoren
- 5: Induktivität
- 7: Ausgangskapazität
- 8, 9: Freilaufdioden
- 10: Last
- Uᵢₙ: Eingangsspannung
- Uₒᵤₜ: Ausgangsspannung

## Patentansprüche

1. Mehrpegel-Resonanzwandler (1) umfassend:
- mehrere Eingangskapazitäten (2,3), die mit einer Eingangsspannung (Uᵢₙ) aufladbar sind;
- eine Ausgangskapazität (7) zum Bereitstellen einer Ausgangsspannung (Uₒᵤₜ);
- eine Induktivität (5), die mit den Eingangskapazitäten (2,3) und der Ausgangskapazität (7) einen Resonanzkreis bildet;
- jeder Eingangskapazität (2,3) zugeordnete Leistungsschalter (4,6), die schaltbar sind, um die Eingangskapazität (2,3) wechselweise über die Induktivität (5) mit der Ausgangskapazität (7) zu verbinden, so dass in jedem Schaltzyklus eine Ladungsmenge in die Ausgangskapazität (7) übertragen wird,
**dadurch gekennzeichnet, dass**
die Leistungsschalter (4,6) als selbsttätig abschaltende Halbleiterschalter, insbesondere Thyristoren, ausgebildet sind, die bei Unterschreiten eines Haltestroms und/oder einer Haltespannung den Stromfluss selbsttätig unterbrechen.

2. Resonanzwandler (1) nach Anspruch 1, wobei die Kapazitätswerte der Eingangskapazitäten (2,3) und der Ausgangskapazität (7) sowie der Induktivitätswert der Induktivität (5) so dimensioniert sind, dass der maximale Stromfluss im Resonanzkreis nach dem Einschalten des Halbleiterschalters (4,6) keinen die Belastungsgrenze des Halbleiterschalters (4,6) übersteigenden Wert annimmt.

3. Resonanzwandler (1) nach Anspruch 1 oder 2, wobei die Kapazitätswerte der Eingangskapazitäten (2,3) und der Ausgangskapazität (7) so dimensioniert sind, dass die während des Einschaltens des Halbleiterschalters (4,6) übertragene Energiemenge nicht zu Spannungshüben über einem vorgegebenen maximalen Spannungshub führt.

4. Resonanzwandler (1) nach Anspruch 1 oder 2, wobei die mehreren Eingangskapazitäten (2,3), die Induktivität (5) und die Leistungsschalter (4,6) eine Ladeeinheit bilden, wobei mehrere Ladeeinheiten mit der Ausgangskapazität (7) verbunden sind.

5. Resonanzwandlersystem mit einem Resonanzwandler (1) nach einem der Ansprüche 1 bis 4 und mit einer Steuereinheit (20), wobei die Steuereinheit (20) ausgebildet ist, die Ausgangsspannung zu erfassen und abhängig von der erfassten Ausgangsspannung eine Einschaltfrequenz des wechselweise Zündens der Halbleiterschalter (4,6) zum Verbinden der jeweiligen Eingangskapazität (2,3) mit der Ausgangskapazität (7) einzustellen.

6. Resonanzwandlersystem nach Anspruch 5, wobei die Halbleiterschalter (4,6) des Resonanzwandlers ausgebildet sind, dass sie durch die Steuereinheit (20) aktiv ausschaltbar sind, wobei die Steuereinheit (20) abhängig von der bereitgestellten Ausgangsleistung die Halbleiterschalter (4,6) entweder nur über das Einstellen der Einschaltfrequenz ansteuert oder durch aktives Ausschalten zum Festlegen einer Einschaltzeitdauer der Halbleiterschalter (4,6) ansteuert.

7. Resonanzwandlersystem nach Anspruch 5 oder 6, wobei die Steuereinheit (20) ausgebildet ist, um nach dem selbsttätigen Ausschalten des entsprechenden Halbleiterschalters (4,6) innerhalb einer Freiwerdezeit kein Einschalten eines der weiteren Halbleiterschalter (4,6) vorzunehmen.

8. Verfahren zum Betreiben eines Resonanzwandlers (1) nach einem der Ansprüche 1 bis 4, wobei die Ausgangsspannung (Uₒᵤₜ) erfasst wird und abhängig von der erfassten Ausgangsspannung (Uₒᵤₜ) eine Frequenz des wechselweise Verbindens einer der Eingangskapazitäten (2,3) mit der Ausgangskapazität (7) eingestellt wird.
